(19) Europäisches Patentamt
European Patent Office
Office européen des brevets

(11) EP 4 563 655 A1

(12) **EUROPEAN PATENT APPLICATION**
published in accordance with Art. 153(4) EPC

(43) Date of publication:
**04.06.2025 Bulletin 2025/23**

(21) Application number: **23846087.7**

(22) Date of filing: **23.06.2023**

(51) International Patent Classification (IPC):
***C08L 69/00*** *(2006.01)* ***C08K 5/42*** *(2006.01)*
***C08K 5/521*** *(2006.01)* ***C08L 51/04*** *(2006.01)*

(52) Cooperative Patent Classification (CPC):
**C08K 5/42; C08K 5/521; C08L 51/04; C08L 69/00**

(86) International application number:
**PCT/JP2023/023275**

(87) International publication number:
**WO 2024/024353 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.07.2022 JP 2022120561**

(71) Applicant: **Mitsubishi Engineering-Plastics Corporation**
**Tokyo 105-0021 (JP)**

(72) Inventor: **TAGUCHI, Jungo**
**Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

(54) **POLYCARBONATE RESIN COMPOSITION AND MOLDED ARTICLE**

(57) A polycarbonate resin composition comprising, relative to 100 parts by mass of a polycarbonate resin (A), 0.01 to 15 parts by mass of a flame retardant (B), 1 to 15 parts by mass of a dienic rubber graft copolymer (C), and 0.01 to 1 part by mass of a fluoropolymer (D), wherein the dienic rubber graft copolymer (C) has a total phosphorus content of 1000 ppm or more and a total calcium content of 300 ppm or more in fluorescent X-ray analysis.

EP 4 563 655 A1

## Description

[Technical Field]

The present invention relates to a polycarbonate resin composition and a molded article, more specifically to a polycarbonate resin composition having excellent flame retardancy, impact resistance, and impact resistance at lower temperatures, as well as a molded article obtained by molding the same.

[Background Art]

Polycarbonate resins are resins excellent in heat resistance, mechanical properties, and electrical characteristics and are widely used as, for example, automobile materials, materials for electric/electronic apparatuses, housing materials, materials for manufacturing parts in other industrial fields, and others. In particular, flame-retardant polycarbonate resin compositions are suitably used as parts for various electrical/electronic and information terminal apparatuses.

A high level of flame retardancy is required for parts for electrical/electronic and information terminal apparatuses. In particular, it is being required to clear V-0 under UL-94 nowadays.

In addition, the need for using polycarbonate resins for products for outdoor use is also increasing. For example, enclosures (housings) of electric/electronic apparatuses for outdoor use, such as battery packs used in a power source for driving electric bicycles and enclosures for charging stations for electric vehicles, are required to have a high level of flame retardancy, as well as high impact resistance at low temperatures, in addition to ordinary impact resistance.

A flame retardant and an elastomer are blended in order to improve flame retardancy and impact resistance. The present applicant has made various proposals about polycarbonate resin compositions containing flame retardants and elastomers, as in PTL 1 to 3.

That is, PTL 1 proposes a polycarbonate resin composition containing an organic sulfonic acid metal salt (B), a fluoropolymer (C), a graft copolymer (D) with an average particle diameter of 160 to 240 nm, obtained by graftpolymerizing a (meth)acrylic acid ester to a dienic rubber, a UV absorber (E), and titanium oxide or carbon black (F).

PTL 2 proposes blending an organic sulfonic acid metal salt (B), a core/shell graft copolymer (C) containing a butadienic rubber component as a core and having a Si content of 300 ppm or more, and an organic phosphoric acid ester metal salt (D).

Furthermore, PTL 3 proposes a polycarbonate resin composition containing a core-shell graft copolymer (B) containing a butadienic rubber as a core and having a specific particle diameter and a phosphorus content of 300 ppm or more, an organic sulfonic acid metal salt-containing flame retardant (C), and 0.05 to 1 part by mass of fluorinated polyolefin (D).

PTL 1 indicates that the low-temperature Charpy value at -30°C is high. However, the impact resistance at - 40°C, which is a specification that is required nowadays, is not sufficient. Although PTL 2 and 3 do not mention the lower temperature impact resistance, the impact resistance at -40°C is not considered sufficient.

[Citation List]

[Patent Literature]

[PTL 1] JP2012219177 A
[PTL 2] WO2014171168
[PTL 3] JP2019019191 A

[Summary of Invention]

[Technical Problem]

As stated above, polycarbonate resin materials having a high level of flame retardancy of V-0 under UL-94 and high impact resistance both at ordinary state and at low temperatures, in particular, polycarbonate resin materials suitable for molded articles for outdoor use, are demanded.

The present invention has been conceived in light of such problems and addresses a problem (object) to provide a polycarbonate resin composition having high flame retardancy and excellent impact resistance at lower temperatures.

[Solution to Problem]

The present inventor has made an intensive study to solve the above problem and, as a result, found that a polycarbonate resin composition having high flame retardancy, high impact resistance, and excellent lower temperature impact resistance is obtained by using an organometallic saltorganometallic salt flame retardant and, as an elastomer combined with the flame retardant, a dienic rubber graft copolymer containing a butadienic rubber component as a core and having a total phosphorus amount of 1000 ppm or more and a total calcium amount of 300 ppm or more, and by further combining a fluoropolymer at respective specific amounts.

The present invention provides the following polycarbonate resin composition and molded article.

1. A polycarbonate resin composition including, relative to 100 parts by mass of a polycarbonate resin (A), 0.01 to 15 parts by mass of a flame retardant (B), 1 to 15 parts by mass of a dienic rubber graft copolymer (C), and 0.01 to 1 part by mass of a fluoropolymer (D), wherein the dienic rubber graft copolymer (C) has a total phosphorus content of 1000 ppm or more and a total calcium content of 300 ppm or more in fluorescent X-ray analysis.
2. A polycarbonate resin composition of the above item 1, wherein the polycarbonate resin (A) contains 20% to 100% of an aromatic polycarbonate resin having an end sealed with p-t-octylphenol.
3. The polycarbonate resin composition of the above item 1, wherein the flame retardant (B) is an organometallic salt flame retardant (B1), a content thereof being 0.01 to 0.5 parts by mass relative to 100 parts by mass of the polycarbonate resin (A).
4. The polycarbonate resin composition of the above item 3, wherein the organometallic salt flame retardant (B1) is an organic sulfonic acid metal salt.
5. The polycarbonate resin composition of the above item 1, wherein the flame retardant (B) is a condensed phosphoric acid ester flame retardant (B2), a content thereof being 5 to 15 parts by mass relative to 100 parts by mass of the polycarbonate resin (A).
6. The polycarbonate resin composition of the above item 1, wherein the flame retardant (B) is a phosphazene flame retardant (B3), a content thereof being 0.1 to 15 parts by mass relative to 100 parts by mass of the polycarbonate resin (A).
7. The polycarbonate resin composition of the above item 1, wherein the dienic rubber graft copolymer (C) has a total phosphorus content of over 1200 ppm in fluorescence X-ray analysis.
8. The polycarbonate resin composition of above item 1, wherein the dienic rubber graft copolymer (C) has a total phosphorus content of 1500 ppm or more and 2500 ppm or less in fluorescence X-ray analysis.
9. A pellet from the polycarbonate resin composition of any one of the items 1 to 8.
10. A molded article obtained by molding the polycarbonate resin composition of any one of the above items 1 to 8.
11. A molded article obtained by molding the polycarbonate resin composition pellet of the above item 9.

[Advantageous Effects of the Invention]

The flame retardant polycarbonate resin composition of the present invention has high flame retardancy and excellent in both impact resistance and lower temperature impact resistance and thus can be used particularly as parts or the like used or installed outdoors. A total phosphorus amount of 1000 ppm or more promotes the formation of chars of dienic rubber graft copolymers during combustion, thus improving flame retardancy. By satisfying the total phosphorus content mentioned above and further having a total calcium content of 300 ppm or more, a resin composition that exhibits higher flame retardancy and has an excellent balance between higher flame retardancy and low-temperature impact strength can be produced.

[Description of Embodiments]

Hereinafter, the present invention will be described in detail, while showing embodiments, examples, and the like. However, the present invention is not to be interpreted as being limited to the embodiments, examples, and the like shown below.

The polycarbonate resin composition of the present invention comprises, relative to 100 parts by mass of a polycarbonate resin (A), 0.01 to 15 parts by mass of a flame retardant (B), 1 to 15 parts by mass of a dienic rubber graft copolymer (C), and 0.01 to 1 part by mass of a fluoropolymer (D), the dienic rubber graft copolymer (C) having a total phosphorus content of 1000 ppm or more and a total calcium content of 300 ppm or more in fluorescent X-ray analysis.

[Polycarbonate Resin (A)]

The polycarbonate resin (A) used in the present invention is not particularly limited, and various polycarbonate

resins may be used. Polycarbonate resins may be classified into aromatic polycarbonate resins, in which the carbon directly bonded to the carbonic acid group is an aromatic carbon, and aliphatic polycarbonate resins in which the carbon directly bonded to the carbonic acid group is an aliphatic carbon, both of which may be used. Among them, aromatic polycarbonate resins are preferable as the polycarbonate resin (A) from the viewpoint of heat resistance, mechanical properties, electrical characteristics, and the like.

Among monomers that serve as raw materials of aromatic polycarbonate resins, examples of aromatic dihydroxy compounds may include:

dihydroxybenzenes such as 1,2-dihydroxybenzene, 1,3-dihydroxybenzene (that is, resorcinol), and 1,4-dihydroxybenzene;
dihydroxybiphenyls such as 2,5-dihydroxybiphenyl, 2,2'-dihydroxybiphenyl, and 4,4'-dihydroxybiphenyl;
dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;
dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy) benzene;
bis(hydroxyaryl)alkanes such as 2,2-bis(4-hydroxyphenyl)propane (that is, bisphenol A), 1,1-bis(4-hydroxyphenyl) propane, 2,2-bis(3-methyl-4-hydroxyphenyl)propane (that is, bisphenol C), 2,2-bis(3-methoxy-4-hydroxyphenyl) propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis [2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl)(4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;
bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-tert-butyl-cyclohexane, 1,1-bis(4-hydroxyphenyl)-3-phenylcyclohexane, and 1,1-bis(4-hydroxyphenyl)-4-phenylcyclohexane;
cardo structure-containing bisphenols such as 9,9-bis(4-hydroxyphenyl)fluorene and 9,9-bis(4-hydroxy-3-methylphenyl)fluorene;
dihydroxydiaryl sulfides such as 4,4'-dihydroxydiphenyl sulfide and 4,4'-dihydroxy-3,3'-dimethyldiphenyl sulfide;
dihydroxydiaryl sulfoxide such as 4,4'-dihydroxydiphenyl sulfoxide and 4,4'-dihydroxy-3,3'-dimethyldiphenyl sulfoxide; and
dihydroxydiaryl sulfones such as 4,4'-dihydroxydiphenyl sulfone and 4,4'-dihydroxy-3,3'-dimethyldiphenyl sulfone.

Among these, bis(hydroxyaryl)alkanes are preferable, and among them, bis(4-hydroxyphenyl)alkanes are preferable, particularly 2,2-bis(4-hydroxyphenyl)propane (that is, bisphenol A) and 2,2-bis(3-methyl-4-hydroxyphenyl) propane (that is, bisphenol C) are more preferable, and 2,2-bis(4-hydroxyphenyl)propane (that is, bisphenol A) is particularly preferable in view of impact resistance and heat resistance.

Aromatic dihydroxy compounds may be used singly or in any combination of two or more of them at any proportion.

Among monomers that serve as raw materials of polycarbonate resins, examples of carbonate precursors that may be used include carbonyl halides, carbonate esters, and the like. One carbonate precursor may be used singly or in any combination of two or more of them at any proportion.

Specific examples of carbonyl halides may include phosgene; haloformates such as a bischloroformate form of a dihydroxy compound and a monochloroformate form of a dihydroxy compound; and the like.

Specific examples of carbonate esters may include diaryl carbonates such as diphenyl carbonate and ditolyl carbonate; dialkyl carbonates such as dimethyl carbonate and diethyl carbonate; carbonate forms of dihydroxy compounds such as a biscarbonate form of a dihydroxy compound, a monocarbonate form of a dihydroxy compound, and a cyclic carbonate.

Production methods of the polycarbonate resin (A) are not particularly limited, and any method may be employed.

Examples of the methods may include interfacial polymerization methods, melt transesterification methods, pyridine methods, ring-opening polymerization methods of cyclic carbonate compounds, solid-state transesterification methods of prepolymers, and the like. Among them, interfacial polymerization methods and melt transesterification methods are preferable because the effect of improving wet heat resistance is higher, and interfacial polymerization methods are particularly preferable.

As the polycarbonate resin (A) used in the present invention, a polycarbonate resin with an end structure represented by the following formula (1) may be used as part or whole of the polycarbonate resin (A).

[C1]

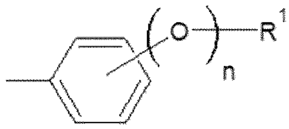

(1)

In formula (1), n is an integer of 0 or 1, and $R^1$ is a C5-14 alkyl group. The polycarbonate resin having the end structure of the above formula (1) can provide a high degree of fluidity while maintaining strength and achieve a high degree of fluidity without decreasing the molecular weight of polycarbonate resins, even employing the desired molecular weight. Thus, high-impact resistance and high-impact resistance at low temperatures can be achieved.

The carbon number of $R^1$ is preferably 6 or more and more preferably 7 or more, and preferably 12 or less and more preferably 10 or less. The alkyl group of $R^1$ may be linear or branched.

Among them, $R^1$ is preferably at least one selected from the group consisting of an n-octyl group, an isooctyl group, and a t-octyl group, and more preferably a t-octyl group. A group in which the end structure in general formula (1) is a t-octyl phenyl group (that is, 1,1,3,3-tetra methyl butyl phenyl group) is particularly preferable.

The position of the $-(O)_nR^1$ group bonded to a phenyl group in the formula (1) may be any of the ortho, meta or para positions, but the para position indicating in the following formula (1') is desirable.

[C2]

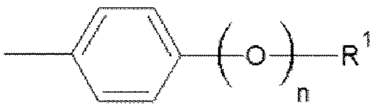

(1')

Preferable specific examples of the $R^1$ group represented by the formula (1) or (1') may include alkylphenyl groups such as p-pentylphenyl group, p-hexylphenyl group, p-heptylphenyl group, p-n-octylphenyl group, p-isooctylphenyl group, p-t-octylphenyl group, p-dodecylphenyl group, and p-tetradecylphenyl group, groups derived from p-nonylphenol, p-dodecylphenol, amylphenol, hexylphenol, heptylphenol, octylphenol, nonylphenol, decylphenol, dodecylphenol, and myristylphenol; and alkoxyphenyl groups such as p-hexyloxyphenyl group, p-n-octyloxyphenyl group, p-isooctyloxyphenyl group, p-t-octyloxyphenyl group, and p-dodecyloxyphenyl group.

Among them, the $R^1$ group represented by formula (1) or (1') is preferably n-octyl group, isooctyl group, and t-octyl group, and more preferably p-n-octyl group, p-isooctyl group, and p-t-octyl group. In particular, p-t-octyl group is preferable because p-t-octyl group achieves high fluidity, which thus enables high impact resistance and lower temperature impact resistance.

When the polycarbonate resin composition contains a polycarbonate resin having an end structure of the formula (1), the proportion thereof is preferably 40% by mass or more and also preferably 100% by mass relative to 100% by mass of the polycarbonate resin (A).

The molecular weight of the polycarbonate resin (A) is preferably 10000 to 50000, more preferably 11000 to 40000, especially 12000 to 35000, and particularly 13000 to 30000 in terms of viscosity average molecular weight (Mv) calculated from the solution viscosity measured at 25°C using methylene chloride as a solvent. By setting the viscosity average molecular weight to be equal to or larger than the lower limit of the range mentioned above, the mechanical strength of the polycarbonate resin composition of the present invention can be increased. In contrast, by setting the viscosity average molecular weight to be equal to or smaller than the upper limit of the range mentioned above, the fluidity dropping of the polycarbonate resin composition of the present invention can be suppressed and improved, and the molding processability can be enhanced to facilitate the molding process.

Two or more types of polycarbonate resins with different viscosity average molecular weights may be used as a mixture. In this case, polycarbonate resins with viscosity average molecular weights outside the suitable range mentioned

above may be mixed.

In the present invention, the viscosity average molecular weight [Mv] means a value calculated from Schnell's viscosity formula, that is, $\eta = 1.23 \times 10^{-4} Mv^{0.83}$ where η is a limiting viscosity at 25°C (unit: dl/g) measured by an ubbelohde viscometer using methylene chloride as a solvent. A limiting viscosity [η] is a value calculated from the formula below, where [$\eta_{sp}$] is a specific viscosity measured at each solution concentration [C] (g/dl).

[Math. 1]

$$\eta = \lim_{c \to 0} \eta_{sp} / \mathrm{C}$$

In order to improve the appearance of molded products and flowability, the polycarbonate resin (A) may contain a polycarbonate oligomer. The viscosity average molecular weight [Mv] of this polycarbonate oligomer is normally 1500 or more and preferably 2000 or more, and normally 9500 or less and preferably 9000 or less. Furthermore, the polycarbonate oligomer included is preferably made to be 30% by mass or less relative to 100% by mass of the polycarbonate resin (A) (including polycarbonate oligomers).

In addition, the polycarbonate resin (A) may be not only a virgin resin but also a polycarbonate resin recycled from a used product (so-called material-recycled polycarbonate resin). It is also preferable that the polycarbonate resin (A) contains both a virgin resin and a recycled resin or may be composed of a recycled polycarbonate resin. The proportion of the recycled polycarbonate resin in the polycarbonate resin composition (A) is preferably 40% by mass or more, 50% by mass or more, 60% by mass or more, or 80% by mass or more, and it is also preferable that a recycled polycarbonate resin occupies 100% of the polycarbonate resin (A).

[Flame Retardant (B)]

The polycarbonate resin composition of the present invention contains 0.01 to 15 parts by mass of the flame retardant (B) relative to 100 parts by mass of the polycarbonate resin (A).

As a flame retardant (B), organic flame retardants are preferable, and examples thereof may include organometallic salt flame retardants, phosphorus flame retardants, siloxanebased flame retardants, and the like, and organometallic salt flame retardants and phosphorus flame retardants are preferable. Phosphorus flame retardants are compounds containing phosphorus in the molecule and may be low molecular weight compounds, oligomers, or polymers. From the perspective of thermal stability, condensed phosphoric acid ester flame retardants and phosphazene flame retardants are particularly preferable.

[Organometallic Salt Flame Retardant (B1)]

As flame retardant (B), an organometallic salt flame retardant (B1) is preferable. By containing the organometallic salt flame retardant (B1), the formation of a carbonized layer during the combustion of polycarbonate resin compositions is promoted, and the flame retardancy is further enhanced, while characteristics, for example, the mechanical properties such as impact resistance, heat resistance, and electrical properties inherent in the polycarbonate resin (A) are well maintained.

As the organometallic salt flame retardant (B1), an organic alkali metal salt compound is preferable. Examples of organometallic salt flame retardants may include sulfonic acid metal salts, carboxylic acid metal salts, boric acid metal salts, phosphoric acid metal salt, and the like. From the perspective of thermal stability, organic sulfonic acid metal salts are preferable.

Examples of metals in alkali metal salts may include lithium (Li), sodium (Na), potassium (K), rubidium (Rb), cesium (Cs), and the like. Among them, sodium, potassium, and cesium are preferable, and sodium and potassium are more preferable. Among them, potassium is preferable from the viewpoint of flame retardancy and hydrolysis resistance.

Preferable examples of organic sulfonic acid alkali metal salts may include alkali metal salts of fluorine-containing aliphatic sulfonic acid or aromatic sulfonic acid. Among them, specific examples of preferable ones may include alkali metal salts of fluorine-containing aliphatic sulfonic acid having at least one C-F bond in the molecule, such as potassium perfluorobutanesulfonate, lithium perfluorobutanesulfonate, sodium perfluorobutanesulfonate, cesium perfluorobutanesulfonate, potassium trifluoromethanesulfonate, lithium trifluoromethanesulfonate, sodium trifluoromethanesulfonate, and cesium trifluoromethanesulfonate; aromatic sulfonic acid alkali metal salts having at least one aromatic group in the molecule, such as dipotassium diphenylsulfone-3,3'-disulfonate, potassium diphenylsulfone-3-sulfonate, sodium benzenesulfonate, sodium (poly)styrenesulfonate, sodium p-toluenesulfonate, sodium (branched) dodecylbenzenesulfonate, sodium trichlorobenzenesulfonate, potassium benzenesulfonate, potassium styrenesulfonate, potassium (poly) styrenesulfonate, potassium p-toluenesulfonate, potassium (branched) dodecylbenzenesulfonate, potassium trichlorobenzenesulfonate, cesium benzenesulfonate, cesium (poly)styrenesulfonate, cesium p-toluenesulfonate, cesium (branched)dodecylbenzenesulfonate, and cesium trichlorobenzenesulfonate; and the like.

Among the examples described above, alkali metal salts of fluorine-containing aliphatic sulfonic acids are particularly preferable, alkali metal salts of perfluoroalkanesulfonic acids are further preferable, and specifically, potassium perfluorobutanesulfonate, sodium trifluoromethan sulfonate, and the like are particularly preferable.

The organometallic salt flame retardant (B1) may be used as a single compound, or two or more different compounds may be used in any combination at any proportion.

The content of the organometallic salt flame retardant (B1) is preferably 0.01 parts by mass or more and 0.5 parts by mass or less relative to 100 parts by mass of the polycarbonate resin (A). The content is preferably 0.02 parts by mass or more, more preferably 0.03 parts by mass or more, and particularly preferably 0.04 part by mass or more, and more preferably 0.4 parts by mass or less, further preferably 0.3 parts by mass or less, and particularly preferably 0.2 parts by mass or less. By polycarbonate resin composition containing the organometallic salt flame retardant (B1) and the dienic rubber graft copolymer (C) in combination, higher flame retardant and impact resistance, including lower temperature impact resistance, can be achieved. If the content of the organometallic salt flame retardant (B1) is too large, the thermal stability and hydrolysis resistance of the polycarbonate resin (A) is likely to decrease, and the appearance of the molded product is likely to be defective, and the mechanical strength is likely to be reduced.

[Condensed Phosphoric Acid Ester Flame Retardant (B2)]

As the flame retardant (B), a condensed phosphoric acid ester flame retardant (B2) is also preferable.

As the condensed phosphoric acid ester flame retardant (B2), a compound represented by the following formula (1) is preferable.

[C3]

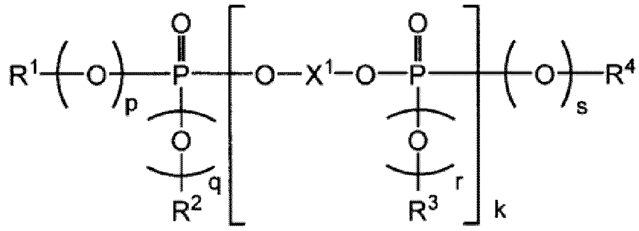

・・・(1)

The condensed phosphoric acid ester compound represented by the general formula (1) may be a mixture of compounds with different numbers of k. In the case of such a mixture of condensed phosphoric acid ester compounds with different numbers of k, k is the average of the mixture. k is normally an integer of 0 to 5. The average number of k in the case of a mixture of compounds with different numbers of k is preferably within the range of 0.5 to 2, more preferably within the range of 0.6 to 1.5, further preferably within the range of 0.8 to 1.2, and particularly preferably within the range of 0.95 to 1.15.

$X^1$ represents a divalent arylene group and, for example, a divalent group derived from a dihydroxy compound, such as resorcinol, hydroquinone, bisphenol A, 2,2'-dihydroxybiphenyl, 2,3'-dihydroxybiphenyl, 2,4'-dihydroxybiphenyl, 3,3'-dihydroxybiphenyl, 3,4'-dihydroxybiphenyl, 4,4'-dihydroxybiphenyl, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, and 2,6-dihydroxynaphthalene, and 2,7-dihydroxynaphthalene. Among these, divalent groups derived from resorcinol, bisphenol A, and 3,3'-dihydroxybiphenyl are particularly preferable.

p, q, r, and s in general formula (1) each represent 0 or 1, and among them, it is preferably 1.

$R^1$, $R^2$, $R^3$, and $R^4$ each represent a C1-6 alkyl group or a C6-20 aryl group that may be substituted with an alkyl group. Examples of such aryl groups may include a phenyl group, a cresyl group, a xylyl group, an isopropylphenyl group, a butylphenyl group, a tert-butylphenyl group, a ditert-butylphenyl group, a p-cumylphenyl group, and the like, and a phenyl group, a cresyl group, and a xylyl group are more preferable.

Specific examples of condensed phosphoric acid ester compounds represented by general formula (1) may include

aromatic phosphoric acid esters such as triphenyl phosphate (TPP), tricresyl phosphate (TCP), trixylenyl phosphate (TXP), cresyl diphenyl phosphate (CDP), 2-ethylhexyl diphenyl phosphate (EHDP), tert-butylphenyl diphenyl phosphate, bis(tert-butylphenyl) phenyl phosphate, tris(tert-butylphenyl) phosphate, isopropylphenyl diphenyl phosphate, bis(isopropylphenyl) diphenyl phosphate, and tris(isopropylphenyl) phosphate; and
condensed phosphoric acid esters such as resorcinol bis(diphenyl phosphate) (RDP), resorcinol bis(dixylenyl phosphate) (RDX), bisphenol A bis(diphenyl phosphate) (BDP), and biphenyl bis(diphenyl phosphate).

The acid value of the condensed phosphoric acid ester compound represented by general formula (1) is preferably 0.2 mgKOH/g or less, more preferably 0.15 mgKOH/g or less, further preferably 0.1 mgKOH/g or less, and particularly preferably 0.05 mgKOH/g or less. The lower limit of such an acid value can be substantially 0.
In addition to the compounds described above, other phosphoric acid ester compounds naturally include 10-(2,5-dihydroxyphenyl)-10H-9-oxa-10-phosphaphenanthrene-10-oxide, 10-(2,3-dihydroxyphenyl)-10H-9-oxa-10-phosphaphenanthrene-10-oxide, 10-(2,4-dihydroxyphenyl)-10H-9-oxa-10-phosphaphenanthrene-10-oxide, and polyester resins, polycarbonate resins, or epoxy resins containing a phosphoric acid ester moiety.
The content of the condensed phosphoric acid ester flame retardant (B2) is preferably 5 parts by mass or more and 15 parts by mass or less, more preferably 6 parts by mass or more, and further preferably 8 parts by mass or more, and more preferably 13 parts by mass or less, and further preferably 12 parts by mass or less, relative to 100 parts by mass of the polycarbonate resin (A). By containing the condensed phosphoric acid ester flame retardant (B2) in combination with the dienic rubber graft copolymer (C), higher flame retardant and impact resistance, including lower temperature impact resistance, can be achieved. If the content of the condensed phosphoric acid ester flame retardant (B2) is too large, the thermal stability and hydrolysis resistance of the polycarbonate resin (A) is likely to decrease, and the appearance of the molded product is likely to be defective, and the mechanical strength is likely to be reduced.

[Phosphazene Flame Retardant (B3)]

As the flame retardant (B), a phosphazene flame retardant (B3) is also preferable.
As the phosphazene flame retardant (B3), a compound represented by the following formula (2) or (3) is preferable.

[C4]

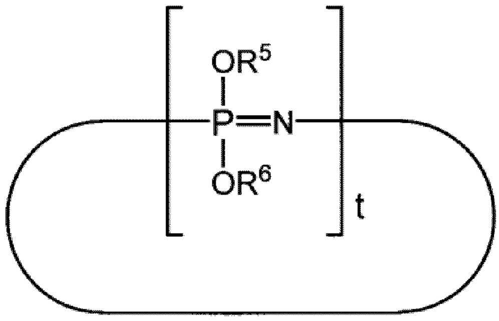

・・・(2)

[C5]

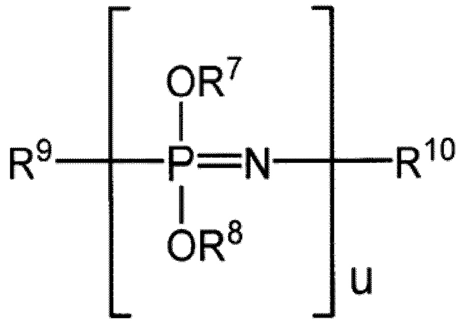

・・・ (3)

Examples of phosphazene compounds represented by the general formula (2) and (3) may include cyclic and/or chain-shaped $C_{1-6}$ alkyl $C_{6-20}$ aryloxyphosphazenes such as phenoxyphosphazene, (poly)tolyloxyphosphazene (for example, o-tolyloxyphosphazene, m-tolyloxyphosphazene, p-tolyloxyphosphazene, o,m-tolyloxyphosphazene, o,p-tolyloxyphosphazene, m,p-tolyloxyphosphazene, o,m,p-tolyloxyphosphazene, and the like), and (poly)xylyloxyphosphazene; cyclic and/or chain-shaped $C_{6-20}$ aryl $C_{1-10}$ alkyl $C_{6-20}$ aryloxyphosphazenes such as (poly)phenoxytolyloxyphosphazene (for example, phenoxy-o-tolyloxyphosphazene, phenoxy-m-tolyloxyphosphazene, phenoxy-p-tolyloxyphosphazene, phenoxy-o,m-tolyloxyphosphazene, phenoxyo,p-tolyloxyphosphazene, phenoxy-m,p-tolyloxyphosphazene, phenoxy-o,m,p-tolyloxyphosphazene, and the like), (poly)phenoxyxylyloxyphosphazene, and (poly)phenoxytolyloxyxylyloxyphosphazene; and the like.

Among them, preferable are cyclic and/or chain-shaped phenoxyphosphazene, cyclic and/or chain-shaped $C_{1-3}$ alkyl $C_{6-20}$ aryloxyphosphazene, $C_{6-20}$ aryloxy $C_{1-3}$ alkyl $C_{6-20}$ aryloxyphosphazene (for example, cyclic and/or chain-shaped tolyloxyphosphazene, cyclic and/or chain-shaped phenoxytolylphenoxyphosphazene, and the like).

In the cyclic phosphazene compounds represented by general formula (2), $R^5$ and $R^6$ each may be identical or different and represent aryl groups or alkylaryl groups. Examples of such aryl groups or alkylaryl groups may include a phenyl group, a naphthyl group, a methylphenyl group, a benzyl group, and the like. Among them, cyclic phenoxyphosphazenes in which $R^5$ and $R^6$ are phenyl groups are preferable.

Examples of such cyclic phenoxyphosphazene compounds may include compounds such as phenoxycyclotriphosphazene, octaphenoxycyclotetraphosphazene, decaphenoxycyclopentaphosphazene, and the like obtained by reacting ammonium chloride and phosphorus pentachloride at a temperature of 120°C to 130°C to prepare a mixture of cyclic and linear chlorophosphazenes, then extracting cyclic chlorophosphazenes such as hexachlorocyclotriphosphazene, octachlorocyclotetraphosphazene, and decachlorocyclopentaphosphazene, and substituting the cyclic chlorophosphazenes with phenoxy groups.

In general formula (2), t represents an integer of 3 to 25, and among them, a compound in which t is an integer of 3 to 8 is preferable. A mixture of compounds having different numbers of t may also be used. Among them, a mixture of compounds including 50% by mass or more of compounds in which t = 3, 10% to 40% by mass of compounds in which t = 4, and 30% by mass or less of compounds in which t = 5 or more is preferable.

In general formula (3), $R^7$ and $R^8$ each may be identical or different and represent aryl groups or alkylaryl groups. Examples of such aryl groups or alkylaryl groups may include phenyl group, naphthyl group, methylphenyl group, benzyl group, and the like, and chain-shaped phenoxyphosphazene in which $R^7$ and $R^8$ are phenyl groups are particularly preferable.

Examples of such chain-shaped phenoxyphosphazene compounds may include a compound obtained by a ring opening polymerization at 220°C to 250°C of hexachlorocyclotriphosphazene obtained by the above method and substituting the resulting linear dichlorophosphazene having a polymerization degree of 3 to 10000 with a phenoxy group.

$R^9$ represents at least one selected from $-N=P(OR^7)_3$ $-N=P(OR^8)_3$, $-N=P(O)OR^7$, and $-N=P(O)OR^8$, and $R^{10}$ is at least one selected from $-P(OR^7)_4$ group, $-P(OR^8)_4$group, $-P(O)(OR^7)_2$, and $-P(O)(OR^8)_2$.

In general formula (3), u represents an integer of 3 to 10000, preferably 3 to 1000, more preferably 3 to 100, and further preferably 3 to 25.

Phosphazene compounds may be crosslinked phosphazene compounds, part of which is crosslinked. Having such a crosslinking structure tends to improve heat resistance.

Examples of such crosslinked phosphazene compounds include compounds represented by the general formula (4) below, for example, compounds having a crosslinked structure of a 4,4'-diphenylene group, such as compounds having a crosslinked structure of 4,4'-sulfonyldiphenylene (bisphenol S residue), compounds having a crosslinked structure of a 2,2-(4,4'-diphenylene)isopropylidene group, compounds having a crosslinked structure of a 4,4'-oxydiphenylene group, and a crosslinked structure of a 4,4'-thiodiphenylene group.

[C6]

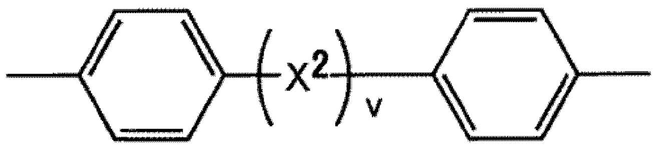

... (4)

[In formula (4), $X^2$ is $-C(CH_3)_2-$, $-SO_2-$, -S-, or -O-, and v is 0 or 1.]

As crosslinked phosphazene compounds, a crosslinked phenoxy phosphazene compound formed by crosslinking a cyclic phenoxy phosphazene compound in which $R^5$ and $R^6$ in general formula (2) are phenyl groups with a crosslinking group represented by the general formula (4) or a crosslinked phenoxy phosphazene compound formed by crosslinking a chain-shaped phenoxy phosphazene compound in which $R^7$ and $R^8$ in the general formula (3) are phenyl groups with the crosslinking group represented by the general formula (4) is preferable from the perspective of flame retardancy, and a crosslinked phenoxy phosphazene compound formed by crosslinking a cyclic phenoxy phosphazene compound with the crosslinking group represented by the general formula (4) is more preferable.

The phenylene group content in the crosslinked phenoxy phosphazene compound is normally 50% to 99.9%, preferably 70% to 90% based on the total number of phenyl groups and phenylene groups in a cyclic phosphazene compound represented by general formula (2) and/or a chain-shaped phenoxy phosphazene compound represented by general formula (3). The crosslinked phenoxy phosphazene compound is particularly preferably a compound that does not have a free hydroxy group in the molecule thereof.

The phosphazene compound is preferably at least one selected from the group consisting of crosslinked phenoxy phosphazene compounds formed by crosslinking a cyclic phenoxyphosphazene compound represented by the general formula (2) and a cyclic phenoxyphosphazene compound represented by the general formula (3) with a crosslinking group from the perspective of flame retardancy and mechanical characteristics.

The content of the phosphazene flame retardant (B3) is preferably 0.1 parts by mass or more and 15 parts by mass or less, more preferably 0.5 parts by mass or more, and further preferably 1 part by mass or more, and more preferably 12 parts by mass or less, and further preferably 10 parts by mass or less, relative to 100 parts by mass of the polycarbonate resin (A). By containing the phosphazene flame retardant (B3) together with the dienic rubber graft copolymer (C), higher flame retardant and impact resistance, including lower temperature impact resistance, can be achieved. If the content of the phosphazene flame retardant (B3) is too large, the thermal stability of the polycarbonate resin (A) is likely to decrease, and the appearance of the molded product is likely to be defective, and the mechanical strength is likely to be reduced.

[Dienic Rubber Graft Copolymer (C)]

The polycarbonate resin composition of the present invention contains a dienic rubber graft copolymer (C) having a total phosphorus content of 1000 ppm or more and a total calcium content of 300 ppm or more in fluorescent X-ray analysis. The dienic rubber graft copolymer (C) is preferably a graft copolymer formed by graft polymerization of a dienic rubber component and a monomer component capable of copolymerizing the dienic rubber component.

Specific examples of dienic rubber components may include polybutadiene rubber, butadiene-acrylic composite rubber, styrene-butadiene rubber, ethylene-propylene-butadiene rubber, and the like. These may be used singly, or two or more thereof may be used as a mixture.

Specific examples of monomer components that can be graft-copolymerized with a dienic rubber component may include aromatic vinyl compound; vinyl cyanide compound; (meth)acrylic acid ester compound; (meth)acrylic acid compound; epoxy groupcontaining (meth)acrylic acid ester compounds, such as glycidyl (meth)acrylate; maleimide compounds, such as maleimide, N-methylmaleimide, and N-phenylmaleimide; $\alpha,\beta$-unsaturated carboxylic acid compounds, such as maleic acid, phthalic acid, and itaconic acid, and anhydrides thereof (for example, maleic anhydride or the like), and the like. These monomer components may be used singly, or two or more thereof may be used together.

Among them, aromatic vinyl compounds, vinyl cyanide compound, (meth)acrylic acid ester compound, and (meth)acrylic acid compound are preferable from the perspective of mechanical characteristics and surface appearance, and styrene and (meth)acrylic acid ester compound are more preferable. Examples of (meth)acrylic acid ester compounds may include methyl (meth)acrylate, ethyl (meth)acrylate, butyl (meth)acrylate, cyclohexyl (meth)acrylate, octyl (meth) acrylate, and the like.

The term "(meth)acrylic" herein means one or both of "acrylic" and "methacrylic". The same is true for the term "(meth)acrylate".

The dienic rubber graft copolymer (C) is particularly preferably a core/shell graft copolymer including a core layer

of a polybutadiene-containing rubber component and a shell layer formed by copolymerizing a (meth)acrylate ester around the core layer. The core/shell graft copolymer preferably contains 40% by mass or more, more preferably contains 60% by mass or more of a butadienic rubber component. A core/shell graft copolymer containing 10% by mass or more of (meth)acrylic acid components is preferable.

Preferable specific examples of core-shell graft copolymers may include methyl methacrylate-butadiene-styrene copolymer (MBS), methyl methacrylate-acrylonitrile-butadiene-styrene copolymer (MABS), methyl methacrylate-butadiene copolymer (MB), methyl methacrylate-acrylic/butadiene rubber copolymer, methyl methacrylate-acrylic/-butadiene rubberstyrene copolymer, and the like. Such rubbery polymers may be used singly, or two or more thereof may be used in combination.

Methods suitable for producing the dienic rubber graft copolymer (C) are well known to a person skilled in the art. Examples of these well-known polymerization methods may include bulk polymerization, solution polymerization, suspension polymerization, emulsion polymerization, and the like, and a combination of bulk polymerization and solution polymerization, a combination of bulk polymerization and suspension polymerization, or other combinations are also preferable. The copolymerization method may be either singlestage grafting or multi-stage grafting.

The dienic rubber graft copolymer (C) having a total phosphorus content of 1000 ppm or more and a total calcium content of 300 ppm or more in fluorescent X-ray analysis is used. It was found that a resin composition that exhibits higher flame retardancy and has an excellent balance of higher flame retardancy and low-temperature impact strength when a total phosphorus amount is 1000 ppm or more and a total calcium amount is 300 ppm or more.

The total phosphorus amount is preferably over 1200 ppm and more preferably 1500 ppm or more, and preferably 2500 ppm or less.

The total calcium amount is preferably 500 ppm or more and more preferably 1000 ppm or more, and preferably 1500 ppm or less.

The dienic rubber graft copolymer (C) preferably has a total S (sulfur) content in fluorescence X-ray analysis of 500 ppm or less, and preferably has a total halogen amount or total Cl (chlorine) content of 100 ppm or more.

The total content of each trace atom mentioned above in the dienic rubber graft copolymer (C) is measured by a fluorescence X-ray analyzer. The amounts of phosphorus components, calcium components, sulfur components, and halogen components included in the dienic rubber graft copolymer (C) mean the amounts in terms of ppm by mass converted to each element. The details of specific measurement methods thereof are as described in the Examples.

Phosphorus, calcium, sulfur, halogen, and the like in the dienic rubber graft copolymer (C) are considered to be derived from the polymerization initiator, dispersant, and other components used and blended in the production process. Meanwhile, the dienic rubber graft copolymer (C) satisfying the above-mentioned prescribed amounts of phosphorus, calcium, sulfur, and halogens can also be selected from commercially available products.

The content of the dienic rubber graft copolymer (C) is within the range of 1 to 15 parts by mass relative to 100 parts by mass of the polycarbonate resin (A). If the content is less than 1 part by mass, the effect of improving impact resistance, which is the purpose of this invention, will not be achieved, and if the amount exceeds 15 parts by mass, the heat resistance will decrease, and the flame retardancy of the polycarbonate resin composition will deteriorate.

When the flame retardant (B) is the organometallic salt flame retardant (B1), the content of the dienic rubber graft copolymer (C) is, relative to 100 parts by mass of the polycarbonate resin (A), preferably within the range of 1 to 10 parts by mass, more preferably 2 parts by mass or more, further preferably 3 parts by mass or more, and particularly preferably 4 parts by mass or more, and more preferably 9 parts by mass or less, further preferably 8 parts by mass or less, and particularly preferably 7 parts by mass or less.

When the flame retardant (B) is the condensed phosphoric acid ester flame retardant (B2), the content of the dienic rubber graft copolymer (C) is, relative to 100 parts by mass of the polycarbonate resin (A), preferably within the range of 5 to 15 parts by mass, more preferably 6 parts by mass or more, further preferably 7 parts by mass or more, and particularly preferably 8 parts by mass or more, and more preferably 14 parts by mass or less, further preferably 13 parts by mass or less, and particularly preferably 12 parts by mass or less.

When the flame retardant (B) is the phosphazene flame retardant (B3), the content of the dienic rubber graft copolymer (C) is, relative to 100 parts by mass of the polycarbonate resin (A), preferably within the range of 3 to 15 parts by mass, more preferably 5 parts by mass or more, further preferably 6 parts by mass or more, and particularly preferably 7 parts by mass or more, and more preferably 14 parts by mass or less, further preferably 12 parts by mass or less, and particularly preferably 10 parts by mass or less.

[Fluoropolymer (D)]

The polycarbonate resin composition of the present invention contains a fluoropolymer (D), and the amount thereof is 0.01 to 1 part by mass relative to 100 parts by mass of the polycarbonate resin (A).

One fluoropolymer may be used singly, or two or more fluoropolymers may be used in any combination at any proportion. As such, the melt properties of the resin composition can be improved and anti-dripping properties during

combustion can be improved by containing a fluoropolymer. Furthermore, flame retardancy can be further improved by combining a fluoropolymer with the organometallic salt flame retardant (B1).

If the content of the fluoropolymer (D) is less than 0.01 parts by mass, the flame retardancy-improving effect will be insufficient, and if the content exceeds 1 part by mass, the appearance of molded products made from resin compounds will be defective, and the mechanical strength will be reduced. The content of the fluoropolymer (D) is preferably 0.05 parts by mass or more, more preferably 0.1 parts by mass or more, further preferably 0.15 parts by mass or more, and particularly preferably 0.2 part by mass or more, and preferably 0.8 parts by mass or less, more preferably 0.6 parts by mass or less, and further preferably 0.5 parts by mass or less, relative to 100 parts by mass of the polycarbonate resin (A).

As the fluoropolymer (D), a fluoroolefin resin is preferable. A fluoroolefin resin is a polymer or copolymer normally including a fluoroethylene structure. Specific examples of fluoroolefins may include difluoroethylene resin, tetrafluoroethylene resin, tetrafluoroethylene/hexafluoropropylene copolymer resin, and the like, and among them, tetrafluoroethylene resin is preferable.

As this fluoropolymer, ones having a fibril-forming ability are preferable, and specific examples may include fluoroolefin resins having a fibril-forming ability. As such, having a fibril-forming ability tends to significantly improve the prevention of dripping during combustion.

As fluoroolefin resins having a fibril-forming ability, fluoroethylene resins having a fibril-forming ability are preferable, and examples thereof may include "TEFLON (registered trademark) 6J" manufactured by Chemours-Mitsui Fluoroproducts Co., Ltd., "POLYFLON F201L", "POLYFLON F103", and "POLYFLON FA500C" manufactured by Daikin Industries, Ltd., and the like. Furthermore, examples of commercially available products of aqueous dispersion of fluoroethylene resins may include "Teflon (registered trademark) 30J" and "TEFLON (registered trademark) 31-JR" manufactured by Chemours-Mitsui Fluoroproducts Co., Ltd., "FLUON D-1" manufactured by Daikin Industries, Ltd., and the like.

Furthermore, fluoroethylene polymers with a multilayer structure obtained by polymerizing vinyl monomers may be used, and examples of such fluoroethylene polymers may include polystyrene-fluoroethylene composites, polystyreneacrylonitrile-fluoroethylene composites, poly(methyl methacrylate)-fluoroethylene composites, poly(butyl methacrylate)-fluoroethylene composites, and the like. For example, "METABLEN A-3800" manufactured by Mitsubishi Chemical Corporation, "BLENDEX 449" manufactured by GE Specialty Chemicals, and the like may be mentioned.

One fluoropolymer (D) may be included singly, or two or more fluoropolymers (D) may be included in any combination at any proportion.

[Phosphorus Stabilizer]

The polycarbonate resin composition of the present invention preferably contains a phosphorus stabilizer (heat stabilizer, antioxidant). Any known phosphorus stabilizers may be used as the phosphorus stabilizer. Specific examples may include oxo acids of phosphorus, such as phosphoric acid, phosphonic acid, phosphorus acid, phosphinic acid, and polyphosphoric acid; acidic pyrophosphoric acid metal salts, such as acidic sodium pyrophosphate, acidic potassium pyrophosphate, and acidic calcium pyrophosphate; phosphoric acid salts of a metal of the group 1 or 2B, such as potassium phosphate, sodium phosphate, cesium phosphate, and zinc phosphate; organic phosphate compounds, organic phosphite compounds, organic phosphonite compounds, and the like. An organic phosphite compound is particularly preferable.

Examples of organic phosphite compounds may include triphenyl phosphite, tris(monononylphenyl) phosphite, tris(monononyl/dinonyl-phenyl) phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, 2,2-methylenebis(4,6-di-tert-butylphenyl) octyl phosphite, and the like. Specific examples of such organic phosphite compounds may include "ADEKA STAB 1178", "ADEKA STAB 2112", and "ADEKA STAB HP-10" manufactured by ADEKA Corporation, "JP-351", "JP-360", and "JP-3CP" manufactured by Johoku Chemical Co., Ltd., and "Irgafos 168" manufactured by BASF SE.

One phosphorus stabilizer may be included singly, or two or more phosphorus stabilizers may be included in any combination at any proportion.

The phosphorus stabilizer content is normally 0.001 parts by mass or more, preferably 0.01 parts by mass or more, and more preferably 0.03 parts by mass or more, and normally 1 part by mass or less, preferably 0.7 parts by mass or less, and more preferably 0.5 parts by mass or less, relative to 100 parts by mass of the polycarbonate resin (A). If the phosphorus stabilizer content is less than the lower limit of the range mentioned above, the heat stability effect may be insufficient. In contrast, if the phosphorus stabilizer content is over the upper limit of the range mentioned above, the effect may be saturated, and it may no longer be economical.

[Phenol Stabilizer]

It is also preferable that the polycarbonate resin composition of the present invention contains a phenolic stabilizer (heat stabilizer, antioxidant). Examples of phenolic stabilizers may include a hindered phenolic antioxidant. Specific examples thereof may include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenylpropionamide), 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-ditert-butyl-4-[4,6-bis(octylthio)-1,3,5-triazin-2-ylamino]phenol, 2-[1-(2-hydroxy-3,5-di-tert-pentylphenyl)ethyl]-4,6-di-tert-pentylphenyl acrylate, and the like.

Among them, pentaerythritol tetrakis[3-(3,5-di-tert-butyl-4-hydroxyphenyl)propionate] and octadecyl-3-(3,5-di-tert-butyl-4-hydroxyphenyl)propionate are preferable. Specific examples of such phenolic antioxidants may include "Irganox 1010" and "Irganox 1076" manufactured by BASF SE, "ADEK STAB AO-50" and "ADEK STAB AO-60" manufactured by ADEKA Corporation, and the like.

One phenolic stabilizer may be included, or two or more phenolic stabilizers may be included in any combination at any proportion.

The phenolic stabilizer content is normally 0.001 parts by mass or more, preferably 0.01 parts by mass or more, and normally 1 part by mass or less, and preferably 0.5 parts by mass or less, relative to 100 parts by mass of the polycarbonate resin (A). If the phenolic stabilizer content is less than the lower limit of the range mentioned above, the effect as a phenolic stabilizer may be insufficient. In contrast, if the phenolic stabilizer content exceeds the upper limit of the range mentioned above, the effect may be saturated, and it may no longer be economical.

[UV Absorber]

The polycarbonate resin composition of the present invention preferably contains a UV absorber. The inclusion of a UV absorber can further improve weather-induced discoloration resistance.

Examples of UV absorbers may include inorganic UV absorbers such as cerium oxide and zinc oxide; organic UV absorbers such as benzotriazole compounds, benzophenone compounds, salicylate compounds, cyanoacrylate compounds, triazine compounds, oxanilide compounds, malonic acid ester compounds, hindered amine compounds, and the like. Among these, organic UV absorbers are preferable, and benzotriazole compounds, cyanoacrylate compounds, and triazine compounds are more preferable.

Specific examples of benzotriazole compounds may include 2-(2'-hydroxy-5'-methylphenyl)benzotriazole, 2-[2'-hydroxy-3',5'-bis($\alpha$,$\alpha$-dimethylbenzyl)phenyl]benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole, 2-(2'-hydroxy-3',5'-di-tert-amyl)-benzotriazole, 2-(2'-hydroxy-5'-tert-octylphenyl)benzotriazole, 2,2'-methylenebis[4-(1,1,3,3-tetramethylbutyl)-6-(2H-benzotriazol-2-yl)phenol], and the like. Among them, 2-(2'-hydroxy-5'-tert-octylphenyl)benzotriazole, 2,2'-methylenebis[4-(1,1,3,3-tetramethylbutyl)-6-(2H-benzotriazole-2-yl)phenol] is preferable, and 2-(2'-hydroxy-5'-tert-octylphenyl)benzotriazole is particularly preferable.

Preferable specific examples of benzophenone compounds may include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, bis(5-benzoyl-4-hydroxy-2-metoxyphenyl)methane, 2,2'-dihydroxy-4-methoxybenzophenone, 2,2'-dihydroxy-4,4'-dimethoxybenzophenone, and the like.

Preferable specific examples of cyanoacrylate compounds may include 1,3-bis[(2-cyano-3,3-diphenylacryloyl)oxy]-2,2-bis[[(2-cyano-3,3-diphenylacryloyl)oxy]methyl]propane, ethyl 2-cyano-3,3-diphenylacrylate, 2-ethylhexyl 2-cyano-3,3-diphenylacrylate, and the like.

Preferable specific examples of triazine compounds may include 2-(4,6-diphenyl-1,3,5-triazin-2-yl)-5-(hexyl)oxyphenol, 2-(4,6-bis-2,4-dimethylphenyl-1,3,5-triazin-2-yl)-5-(hexyl)oxyphenol, 2-(4,6-dibiphenyl-1,3,5-triazin-2-yl)-5-[(2-ethylhexyl)oxy]phenol, and the like.

Preferable specific examples of salicylate compounds may include phenyl salicylate, 4-tert-butylphenyl salicylate, and the like.

Preferable specific examples of oxanilide compounds may include 2-ethoxy-2'-ethyloxalinic acid bisalinide and the like.

As malonic acid ester compounds, 2-(alkylidene)malonic acid esters are preferable, and 2-(1-arylalkylidene)malonic acid esters are more preferable.

The content of the UV absorbers, when contained, is normally 0.05 parts by mass or more and preferably 0.1 parts by mass or more, and normally 1 part by mass or less and preferably 0.5 part by mass or less, relative to 100 parts by mass

of the polycarbonate resin (A). If the UV absorber content is less than the lower limit of the range mentioned above, the effect of improving weatherability may be insufficient. In contrast, if the UV absorber content is over the upper limit of the range mentioned above, mold deposit or the like may occur, which may cause mold contamination.

One UV absorber may be included singly, or two or more UV absorbers may be included in any combination at any proportion.

[Mold-Release Agent]

The polycarbonate resin composition of the present invention preferably contains a mold-release agent. Examples of mold-release agents may include aliphatic carboxylic acids, esters of aliphatic carboxylic acids and alcohols, aliphatic hydrocarbon compounds with a number average molecular weight of 200 to 15,000, polysiloxanic silicone oils, and the like.

Examples of aliphatic carboxylic acids include saturated or unsaturated aliphatic monohydric, dihydric, or trihydric carboxylic acid. Aliphatic carboxylic acids herein encompass alicyclic carboxylic acids. Among these, preferable aliphatic carboxylic acids are C6-36 monohydric or dihydric carboxylic acids, and C6-36 aliphatic saturated monohydric carboxylic acids are further preferable. Specific examples of such aliphatic carboxylic acids may include palmitic acid, stearic acid, caproic acid, capric acid, lauric acid, arachic acid, behenic acid, lignoceric acid, cerotic acid, melissic acid, tetratriacontanoic acid, montanic acid, adipic acid, azelaic acid, and the like.

For example, as the aliphatic carboxylic acid in an ester of an aliphatic carboxylic acid and an alcohol, the same one as the aliphatic carboxylic acid mentioned above may be used. Meanwhile, examples of alcohols may include saturated or unsaturated monohydric or polyhydric alcohols. These alcohols may have a substituent, such as a fluorine atom, an aryl group, or the like. Among them, monohydric or polyhydric saturated alcohol with a carbon number of 30 or less is preferable, and an aliphatic saturated monohydric alcohol or aliphatic saturated polyhydric alcohol with a carbon number of 30 or less is further preferable. The term "aliphatic" is herein used as a term encompassing alicyclic compounds.

Specific examples of such alcohols may include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol, and the like.

The ester mentioned above may contain an aliphatic carboxylic acid and/or an alcohol as impurities. Furthermore, the ester mentioned above may be a pure substance and also may be a mixture of a plurality of compounds. Furthermore, as the aliphatic carboxylic acid and alcohol bonded to constitute one ester, one aliphatic carboxylic acid and one alcohol may be used, or two or more of each may be used in any combination at any proportion.

Specific examples of esters of aliphatic carboxylic acids and alcohols may include beeswax (a mixture mainly containing myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and the like.

Examples of aliphatic hydrocarbons with a number average molecular weight of 200 to 15,000 may include liquid paraffin, paraffin wax, microcrystalline wax, polyethylene wax, Fischer-Tropsch wax, C3-12 $\alpha$-olefin oligomers, and the like. The term "aliphatic hydrocarbon" herein encompasses alicyclic hydrocarbons. Furthermore, these hydrocarbons may be partially oxidized.

Among them, paraffin wax, polyethylene wax, or partial oxide of polyethylene wax is preferable, and paraffin wax or polyethylene wax is further preferable.

Furthermore, the number average molecular weight of the aliphatic hydrocarbon is preferably 5,000 or less.

The aliphatic hydrocarbons may be a single substance, and mixtures of aliphatic hydrocarbons having various constitutional components and molecular weights may also be used as long as the main component is within the above range.

Examples of polysiloxanic silicone oil may include dimethylsilicone oil, methylphenylsilicone oil, diphenylsilicone oil, fluorinated alkylsilicone oil, and the like.

As the mold-release agent described above, one mold-release agent may be included, or two or more mold-release agents may be included in any combination at any proportion.

The content of the mold-release agent is normally 0.001 parts by mass or more and preferably 0.01 parts by mass or more, and normally 2 parts by mass or less and preferably 1 part by mass or less, relative to 100 parts by mass of the polycarbonate resin (A). If the mold-release agent content is less than the lower limit of the range mentioned above, the effect of the mold releasability may be insufficient. In contrast, if the mold-release agent content is over the upper limit of the range mentioned above, the hydrolysis resistance may be decreased, and mold contamination during injection molding may occur.

[Other Components]

The polycarbonate resin composition of the present invention may contain other components in addition to those described above as necessary, as long as the desired physical properties are not significantly impaired. Examples of other components may include resins other than polycarbonate resin, various resin additives, and the like. One other component may be included singly, or two or more other components may be included in any combination at any proportion.

Other Resins

Examples of other resins may include thermoplastic polyester resins such as polyethylene terephthalate resin, polytrimethylene terephthalate, and polybutylene terephthalate resin; styrene resins such as polystyrene resin, high impact polystyrene resin (HIPS), and acrylonitrile-styrene copolymer (AS resins); polyolefin resins such as polyethylene resin and polypropylene resin; polyamide resin; polyimide resin; polyetherimide resin; polyurethane resin; polyphenylene ether resin; polyphenylene sulfide resin; polysulfone resin; polymethacrylate resin, and the like.

One other resin may be included singly, or two or more other resins may be included in any combination at any proportion.

The content of other resins than the polycarbonate resin (A), when contained, is preferably 20 parts by mass or less, more preferably 10 parts by mass or less, further preferably 5 parts by mass or less, and particularly preferably 3 parts by mass or less relative to 100 parts by mass of the polycarbonate resin (A).

Resin Additives

Examples of resin additives may include dyes and pigments (including carbon black), antistatic agents, antifogging agents, anti-blocking agents, flow improvers, plasticizers, dispersants, antibacterial agents, and the like. One resin additive may be included singly, or two or more resin additives may be included in any combination at any proportion.

[Production Method of Polycarbonate Resin Composition]

Production methods of the polycarbonate resin composition of the present invention are not limited, and any known production method of polycarbonate resin compositions may be widely employed.

Specific examples thereof may include a method including mixing the essential components described above and other components blended as needed in advance using various mixers, such as a tumbler or a Henschel mixer, and then melt-kneading them by a mixer such as a Banbury mixer, a roll, a Brabender, a single-screw kneading extruder, a twin-screw kneading extruder, or a kneader.

Alternatively, the polycarbonate resin composition of the present invention can be produced by, for example, feeding the components to an extruder using a feeder without mixing the components in advance or after mixing only part of the components in advance, and then melt-kneading the components.

Alternatively, the polycarbonate resin composition of the present invention can be produced by, for example, using a resin composition, which is obtained by mixing part of components in advance, then feeding the resulting mixture to an extruder, and melt-kneading the mixture, as a masterbatch, then mixing this masterbatch with the remaining components again, and melt-kneading the resulting mixture.

For example, when mixing components that are difficult to disperse, dispersibility can be increased by dissolving or dispersing the components that are difficult to disperse in a solvent such as water or an organic solvent in advance, and then kneading other components with the solution or dispersion.

Any molding method normally employed for molding a polycarbonate resin composition may be used as the method for producing a molded article. Examples thereof may include an injection molding method, a super-high-speed injection molding method, an injection compression molding method, a two-color molding method, a hollow molding method such as a gas-assisted injection molding method, a molding method using a heatinsulating mold, a molding method using a rapid heating mold, foaming molding (including supercritical fluid), insert molding, an IMC (in-mold coating) molding method, an extrusion molding method, a sheet molding method, a hot molding method, a rotation molding method, a laminate molding method, a press molding method, a blow molding method, and the like. In addition, a molding method using a hot runner system may also be used. Among them, injection molding methods, such as an injection molding method, a super-high-speed injection molding method, and an injection compression molding method, are preferable.

[Molded Article]

Examples of molded articles may include electric/electronic apparatuses, office automation apparatuses,

information terminal apparatuses, machine parts, household appliances, vehicle parts, building materials, various containers, leisure goods and miscellaneous goods, lighting devices, and the like. Among these, in particular, it is suitable for use in components for secondary battery devices used indoors or outdoors, battery packs, battery packs used for power sources to drive electric bicycles, housings for electric vehicle charging stations, and housings for electric/-electronic devices used outdoors, such as electricity meters.

[Examples]

Hereinafter, the present invention will be described more specifically while indicating Examples. However, the present invention should not be construed as limited to the following examples.

(Examples 1 to 8 and Comparative Examples 1 to 8)

Components used in Examples and Comparative Examples are listed in Table 1 below.

[Table 1]

| Component | Abbrev. | |
|---|---|---|
| PC resin | A1 | Aromatic polycarbonate resin made from bisphenol A (as start material) by interfacial polymerization<br>Viscosity average molecular weight: 21,000<br>"Lupilon S-3000" by Mitsubishi Engineering-Plastics Corp. |
| | A2 | Aromatic polycarbonate resin made from bisphenol A (as start material) by interfacial polymerization<br>Viscosity average molecular weight: 28000<br>"Lupilon E-2000" by Mitsubishi Engineering-Plastics Corp. |
| | A3 | Aromatic polycarbonate resin having an end sealed with p-tert-octylphenol, made from bisphenol A (as start material) by interfacial polymerization<br>Viscosity average molecular weight: 18,000<br>"Lupizeta T-3700" by Mitsubishi Gas Chemical Co. |
| | A4 | Polycarbonate resin derived from market-recovered product<br>Viscosity average molecular weight: 21,000<br>"PC-116X" by Ningbo Xuri Hongyu Technology Co. |
| Flame retardant | B1-1 | Potassium perfluorobutane sulfonate<br>"Bayowet C4" by Lanxess Inc. |
| | B1-2 | Potassium perfluoromethanesulfonate<br>Eftop EF-12" Mitsubishi Materials Corp. |

(continued)

| Component | Abbrev. | |
|---|---|---|
| Dienic rubber graft copolymer | C1 | MBS core-shell graft copolymer<br>"Paraloid EXL-6601" by The Dow Chemical Company<br>Total phosphorus amount: 1730 ppm, total Ca amount: 1200 ppm, total S amount: 330 ppm, total Cl amount: 100 ppm or less (detection limit or less) |
| | CX1 | MBS core-shell graft copolymer<br>"METABLEN E870A" by Mitsubishi Chemical Corp.<br>Total phosphorus amount: 664 ppm, total Ca amount: 1116 ppm, total S amount: 1470 ppm, total Cl amount: 100 ppm or less (detection limit or less) |
| | CX2 | MB core-shell graft copolymer<br>"Kaneace M M711"by Kaneka Corp.<br>Total phosphorus amount: 232 ppm, total Ca amount: 1130 ppm, total S amount: 948 ppm, total Cl amount: 202 ppm |
| | CX3 | MB core-shell graft copolymer<br>"Paraloid EXL-2690" by The Dow Chemical Company<br>Total phosphorus amount: 1160 ppm<br>total Ca amount: 100 ppm or less (detection limit or less)<br>total S amount: 115 ppm, total Cl amount: 110 ppm |
| Fluoropolymer | D | Polytetrafluoroethylene<br>"FA-500H" by Daikin Industries. |
| Stabilizer | E1 | Phosphorus Stabilizer<br>Tris(2,4-di-tert-butylphenyl)phosphite<br>"ADK STAB 2112" by ADEKA Corp. |
| | E2 | Phenolic thermal stabilizer<br>pentaerythritol tetrakis[3-(3,5-di-tert-butyl-4-hydroxyphenyl)propionate]<br>"IRGANOX 1010" by BASF |

The amounts of phosphorus, calcium, sulfur, and chlorine in the dienic rubber graft copolymer are values (ppm by mass) measured in vacuum using a tabletop fluorescent X-ray analyzer "ZSX mini II" manufactured by Rigaku Corporation in a measurement area diameter $\varphi$ of 30 mm and a sample rotation of 30 rpm.

<Resin Pellet Production>

The components listed in Table 1 above were blended at the proportions (parts by mass) listed in Tables 3 or later, mixed in a tumbler for 20 minutes, then fed into a twin-screw extruder equipped with a single vent, "TEX 30$\alpha$" manufactured by The Japan Steel Works, Ltd., melt-mixed at a screw revolution number of 120 rpm, a discharge amount of 30 kg/hr, and a barrel temperature of 280°C, and molten resin extruded in a strand shape was quenched in a water tank and pelletized using a pelletizer to obtain pellets of a polycarbonate resin composition.

<Preparation of Test Pieces>

The pellets obtained in the production method described above were dried at 120°C for 4 hours and injection-molded using the NEX 80 III injection molding machine manufactured by Nissei Plastic Industrial Co., Ltd. at a cylinder temperature of 300°C and a mold temperature of 80°C to prepare an ISO multi-purpose test piece (3 mm thickness).

The pellets obtained in the method described above were dried at 120°C for 4 hours and injection-molded at a cylinder temperature of 280°C, a mold temperature of 80°C, and a molding cycle of 30 seconds using the SE 100 DU injection molding machine manufactured by Sumitomo Heavy Industries, Ltd., to prepare a test piece for UL combustion tests with a length of 125 mm, a width of 13 mm, and a thickness of 1.5 mm.

<Evaluation of Impact Resistance>

Using the ISO multi-purpose test piece (3 mm), which had been prepared in the manner described above, a V-notch with R = 0.25 was made in accordance with ISO 179, and notched Charpy impact strength (unit: $kJ/m^2$) was measured at 23°C and -40°C.

<Evaluation of Flame Retardancy>

The flame retardancy of each polycarbonate resin composition was evaluated by controlling the humidity of a test piece (1.5 mm thickness) for the UL flammability test, which had been prepared in the manner described above, for 48 hours in a constant temperature and humidity room at a temperature of 23°C and a humidity of 50% and performing a test in accordance with the UL 94 test (Tests for Flammability of Plastic Materials for Parts in Devices and Appliances) provided by the UL LLC.

The UL94-V test is a method of evaluating flame retardancy based on the afterflame time and the drip characteristics after the flame of a burner is applied to the lower end of a test piece of a specified size held vertically for 10 seconds. In order to achieve V-0, V-1, or V-2 flame retardancy, it is necessary to meet the criteria listed in the following table.

[Table 2]

| | V-0 | V-1 | V-2 |
|---|---|---|---|
| Afterflame time for each test | Not longer than 10 seconds | Not longer than 30 seconds | Not longer than 30 seconds |
| Total afterflame time of 5 times | Not longer than 50 seconds | Not longer than 250 seconds | Not longer than 250 seconds |
| Cotton ignition by drip | None | None | Ignited |

The term "afterflame time" herein means the length of time during which the test piece continues flame combustion after the ignition source was removed. In addition, cotton ignition by drip is determined by whether the cotton used for marking, which is located approximately 300 mm below the lower end of the test piece, is ignited or not by the dripped (drip) matter from the test piece. Furthermore, if any of the five tests per material did not meet the above criteria, the test sample was evaluated as NR (not rated) as the sample did not satisfy V-2.

[Table 3]

| | | Example | | | Comp. Example | | | |
|---|---|---|---|---|---|---|---|---|
| Component | Abbrev. | 1 | 2 | 3 | 1 | 2 | 3 | 4 |
| PC resin | A1 | 67.6 | 67.6 | 67.6 | 67.6 | 67.6 | 67.6 | 67.6 |
| | A2 | 32.4 | 32.4 | 32.4 | 32.4 | 32.4 | 32.4 | 32.4 |
| | A3 | | | | | | | |
| | A4 | | | | | | | |
| Flame retardant | B1-1 | 0.08 | 0.08 | 0.08 | 0.08 | 0.08 | 0.08 | 0.08 |
| | B1-2 | | | | | | | |
| Dienic rubber graft copolymer | C1 | 2 | 4 | 5 | | | | |
| | CX1 | | | | | 5 | | |
| | CX2 | | | | | | 5 | |
| | CX3 | | | | | | | 5 |
| Fluoropolymer | D | 0.3 | 0.3 | 0.3 | 0.3 | 0.3 | 0.3 | 0.3 |
| Stabilizer | E1 | 0.01 | 0.01 | 0.01 | 0.01 | 0.01 | 0.01 | 0.01 |
| | E2 | 0.01 | 0.01 | 0.01 | 0.01 | 0.01 | 0.01 | 0.01 |
| 23°C Charpy ($kJ/m^2$) | | 78 | 75 | 72 | 75 | 71 | 71 | 68 |
| -40°C Charpy ($kJ/m^2$) | | 24 | 41 | 54 | 12 | 43 | 57 | 41 |
| UL94-V (1.5mmt) | | V-0 | V-0 | V-0 | V-0 | V-1 | NR | V-1 |

In the above tables, it is found that dienic rubber graft copolymers in which the phosphorus amount and Ca amount did not satisfy the stipulations of the invention of the present application in Comparative Examples 1 to 4 were not able to achieve flame retardancy and lower temperature impact strength in a well-balanced manner.

[Table 4]

| | | Example | | | | Comp. Ex. |
|---|---|---|---|---|---|---|
| Component | Abbrev. | 4 | 5 | 6 | 7 | 5 |
| PC resin | A1 | | | | | |
| | A2 | 56.3 | 56.3 | 56.3 | 56.3 | 56.3 |
| | A3 | 43.7 | 43.7 | 43.7 | 43.7 | 43.7 |
| | A4 | | | | | |
| Flame retardant | B1-1 | | | | | |
| | B1-2 | 0.08 | 0.08 | 0.1 | 0.12 | 0.08 |
| Dienic rubber graft copolymer | C1 | 4 | 5 | 5 | 5 | |
| | CX1 | | | | | |
| | CX2 | | | | | 5 |
| | CX3 | | | | | |
| Fluoropolymer | D | 0.3 | 0.3 | 0.3 | 0.3 | 0.3 |
| Stabilizer | E1 | 0.01 | 0.01 | 0.01 | 0.01 | 0.01 |
| | E2 | 0.01 | 0.01 | 0.01 | 0.01 | 0.01 |
| 23°C Charpy (kJ/$m^2$) | | 73 | 72 | 67 | 66 | 73 |
| -40°C Charpy (kJ/$m^2$) | | 26 | 36 | 35 | 36 | 51 |
| UL94-V (1.5mmt) | | V-0 | V-0 | V-0 | V-0 | V-1 |

[Table 5]

| | | Example | Comp. Ex. | | |
|---|---|---|---|---|---|
| Component | Abbrev. | 8 | 6 | 7 | 8 |
| PC resin | A1 | | | | |
| | A2 | 32.4 | 32.4 | 32.4 | 32.4 |
| | A3 | | | | |
| | A4 | 67.6 | 67.6 | 67.6 | 67.6 |
| Flame retardant | B1-1 | 0.08 | 0.08 | 0.08 | 0.08 |
| | B1-2 | | | | |
| Dienic rubber graft copolymer | C1 | 5 | | | |
| | CX1 | | 5 | | |
| | CX2 | | | 5 | |
| | CX3 | | | | 5 |
| Fluoropolymer | D | 0.3 | 0.3 | 0.3 | 0.3 |
| Stabilizer | E1 | 0.01 | 0.01 | 0.01 | 0.01 |
| | E2 | 0.01 | 0.01 | 0.01 | 0.01 |
| 23°C Charpy (kJ/$m^2$) | | 71 | 71 | 73 | 69 |
| -40°C Charpy (kJ/$m^2$) | | 50 | 40 | 58 | 38 |

(continued)

| | | Example | Comp. Ex. | | |
|---|---|---|---|---|---|
| Component | Abbrev. | 8 | 6 | 7 | 8 |
| UL94-V (1.5mmt) | | V-0 | V-1 | NR | V-1 |

(Examples 9 to 12 and Comparative Example 8 to 16)

Components used in Examples and Comparative Examples are listed in Table 6 below.

[Table 6]

| Component | Abbrev. | |
|---|---|---|
| PC resin | A1 | Aromatic polycarbonate resin made from bisphenol A (as start material) by interfacial polymerization<br>Viscosity average molecular weight: 21,000<br>"Lupilon S-3000" by Mitsubishi Engineering-Plastics Corp. |
| | A2 | Aromatic polycarbonate resin made from bisphenol A (as start material) by interfacial polymerization<br>Viscosity average molecular weight: 28000<br>"Lupilon E-2000" Mitsubishi Engineering-Plastics Corp. |
| | A4 | Polycarbonate resin derived from market-recovered products<br>Viscosity average molecular weight: 21,000<br>"PC-116X" by Ningbo Xuri Hongyu Technology Co. |
| Flame retardant | B2-1 | Aromatic condensed phosphate ester<br>Bisphenol A Bis (diphenyl phosphate)<br>"ADK STAB FP-600" by ADEKA Corp. |
| Dienic rubber graft copolymer | C1 | MBS core-shell graft copolymer<br>"Paraloid EXL-6601" by The Dow Chemical Company<br>Total phosphorus amount: 1730 ppm, total Ca amount: 1200 ppm,<br>total S amount: 330 ppm<br>total Cl amount: 100 ppm or less (detection limit or less) |
| | CX1 | MBS core-shell graft copolymer<br>"METABLEN E870A" by Mitsubishi Chemical Corp.<br>Total phosphorus amount: 664 ppm, total Ca amount: 1116 ppm, total S amount: 1470 ppm<br>total Cl amount: 100 ppm or less (detection limit or less) |
| | CX2 | MB core-shell graft copolymer<br>"Kaneace M M711" by Kaneka Corp.<br>Total phosphorus amount: 232 ppm, total Ca amount: 1130 ppm, total S amount: 948 ppm, total Cl amount: 202 ppm |
| | CX3 | MB core-shell graft copolymer<br>"Paraloid EXL-2690" by The Dow Chemical Company<br>Total phosphorus amount: 1160 ppm<br>total Ca amount: 100 ppm or less (detection limit or less)<br>total S amount: 115 ppm, total Cl amount: 110 ppm |
| Fluoropolymer | D | Polytetrafluoroethylene<br>"FA-500H", manufactured by Daikin Industries. |

(continued)

| Component | Abbrev. | |
|---|---|---|
| Stabilizer | E1 | Phosphorus Stabilizer<br>Tris(2,4-di-tert-butylphenyl)phosphite<br>"ADK STAB 2112" by ADEKA Corp. |
| | E2 | Phenolic thermal stabilizer<br>pentaerythritol tetrakis[3-(3,5-di-tert-butyl-4-hydroxyphenyl)propionate]<br>"IRGANOX 1010" by BASF |

<Resin Pellet Production>

The components listed in Table 6 above, except the aromatic condensed phosphoric acid ester flame retardant, were blended at the proportions (parts by mass) listed in Tables 7 and 8, mixed in a tumbler for 20 minutes, then fed from an upstream feeder to a twin-screw extruder equipped with a single vent, "TEX 30$\alpha$" manufactured by The Japan Steel Works, Ltd., and, while feeding the aromatic condensed phosphoric acid ester flame retardant in the middle of the barrel, the components were melt-mixed at a screw revolution number of 120 rpm, a discharge amount of 30 kg/hr, and a barrel temperature of 260°C, and molten resin extruded in a strand shape was quenched in a water tank and pelletized using a pelletizer to obtain pellets of a polycarbonate resin composition.

<Preparation of Test Pieces>

The pellets obtained in the production method described above were dried at 80°C for 4 hours and injection-molded using the NEX 80 III injection molding machine manufactured by Nissei Plastic Industrial Co., Ltd. at a cylinder temperature of 260°C and a mold temperature of 50°C to prepare an ISO multi-purpose test piece (3 mm thickness).

The pellets obtained in the method described above were dried at 80°C for 4 hours and injection-molded at a cylinder temperature of 270°C, a mold temperature of 60°C, and a molding cycle of 32 seconds using the SE 100 DU injection molding machine manufactured by Sumitomo Heavy Industries, Ltd., to prepare a test piece for UL combustion tests with a length of 125 mm, a width of 13 mm, and a thickness of 0.75 mm.

<Evaluation of Impact Resistance>

Using the ISO multi-purpose test piece (3 mm), which had been prepared in the manner described above, a V-notch with R = 0.25 was made in accordance with ISO 179, and notched Charpy impact strength (unit: kJ/$m^2$) was measured at 23°C and -30°C.

<Evaluation of Flame Retardancy>

The flame retardancy of each polycarbonate resin composition was evaluated by controlling the humidity of a test piece (0.75 mm thickness) for the UL flammability test, which had been prepared in the manner described above, for 48 hours in a constant temperature and humidity room at a temperature of 23°C and a humidity of 50% and performing the test similarly to the manner described above in accordance with the UL 94 test (Tests for Flammability of Plastic Materials for Parts in Devices and Appliances) provided by the UL LLC described above.

[Table 7]

| | | Example | | | Comparative Example | | | | |
|---|---|---|---|---|---|---|---|---|---|
| Component | Abbrev. | 9 | 10 | 11 | 9 | 10 | 11 | 12 | 13 |
| PC resin | A1 | 81.4 | 81.4 | 81.4 | 81.4 | 81.4 | 81.4 | 81.4 | 81.4 |
| | A2 | 18.6 | 18.6 | 18.6 | 18.6 | 18.6 | 18.6 | 18.6 | 18.6 |
| | A4 | | | | | | | | |
| Flame retardant | B2-1 | 10 | 10 | 10 | 10 | 10 | 10 | 10 | 10 |

(continued)

| | | Example | | | Comparative Example | | | | |
|---|---|---|---|---|---|---|---|---|---|
| Component | Abbrev. | 9 | 10 | 11 | 9 | 10 | 11 | 12 | 13 |
| Dienic rubber graft copolymer | C1 | 7.5 | 10 | 5 | | | | | |
| | CX1 | | | | | 7.5 | 10 | | |
| | CX2 | | | | | | | 7.5 | |
| | CX3 | | | | | | | | 7.5 |
| Fluoropolymer | D | 0.3 | 0.3 | 0.3 | 0.3 | 0.3 | 0.3 | 0.3 | 0.3 |
| Stabilizer | E1 | 0.03 | 0.03 | 0.03 | 0.03 | 0.03 | 0.03 | 0.03 | 0.03 |
| | E2 | 0.05 | 0.05 | 0.05 | 0.05 | 0.05 | 0.05 | 0.05 | 0.05 |
| 23°C Charpy (kJ/$m^2$) | | 62 | 59 | 61 | 6 | 64 | 59 | 64 | 60 |
| -40°C Charpy (kJ/$m^2$) | | 23 | 40 | 14 | 5 | 27 | 46 | 30 | 24 |
| UL94-V (1.5mmt) | | V-0 | V-0 | V-0 | V-0 | V-2 | NR | NR | V-2 |

[Table 8]

| | | Example | Comp. Ex. | | |
|---|---|---|---|---|---|
| Component | Abbrev. | 12 | 14 | 15 | 16 |
| PC resin | A1 | | | | |
| | A2 | 18.6 | 18.6 | 18.6 | 18.6 |
| | A4 | 81.4 | 81.4 | 81.4 | 81.4 |
| Flame retardant | B2-1 | 10 | 10 | 10 | 10 |
| Dienic rubber graft copolymer | C1 | 7.5 | | | |
| | CX1 | | 7.5 | | |
| | CX2 | | | 7.5 | |
| | CX3 | | | | 7.5 |
| Fluoropolymer | D | 0.3 | 0.3 | 0.3 | 0.3 |
| Stabilizer | E1 | 0.03 | 0.03 | 0.03 | 0.03 |
| | E2 | 0.05 | 0.05 | 0.05 | 0.05 |
| 23°C Charpy (kJ/$m^2$) | | 62 | 63 | 64 | 61 |
| -40°C Charpy (kJ/$m^2$) | | 22 | 27 | 31 | 22 |
| UL94-V (1.5mmt) | | V-0 | V-2 | NR | V-2 |

(Examples 13 to 15 and Comparative Examples 17 to 27)

Components used in Examples and Comparative Examples are listed in Table 9 below.

[Table 9]

| Component | Abbrev. | |
|---|---|---|
| PC resin | A1 | Aromatic polycarbonate resin made from bisphenol A (as start material) by interfacial polymerization<br>Viscosity average molecular weight: 21,000<br>"Lupilon S-3000" by Mitsubishi Engineering-Plastics Corp. |
| | A2 | Aromatic polycarbonate resin made from bisphenol A (as start material) by interfacial polymerization<br>Viscosity average molecular weight: 28000<br>"Lupilon E-2000" by Mitsubishi Engineering-Plastics Corp. |
| Flame retardant | B3-1 | Phosphonitrile acid phenyl ester<br>"RabitLE FP-110" by Fushimi Pharmaceutical Co. |
| Dienic rubber graft copolymer | C1 | MBS core-shell graft copolymer<br>"Paraloid EXL-6601" by The Dow Chemical Company<br>Total phosphorus amount: 1730 ppm, total Ca amount: 1200 ppm, total S amount: 330 ppm, total Cl amount: 0 ppm |
| | CX1 | MBS core-shell graft copolymer<br>"METABLEN E870A" by Mitsubishi Chemical Corp.<br>Total phosphorus amount: 664 ppm, total Ca amount: 1116 ppm, total S amount: 1470 ppm, total Cl amount: 0 ppm |
| | CX2 | MB core-shell graft copolymer<br>"Kaneace M M711" by Kaneka Corp.<br>Total phosphorus amount: 232 ppm, total Ca amount: 1130 ppm, total S amount: 948 ppm, total Cl amount: 202 ppm |
| | CX3 | MB core-shell graft copolymer<br>"Paraloid EXL-2690" by The Dow Chemical Company<br>Total phosphorus amount: 1160 ppm, total Ca amount: 0 ppm, total S amount: 115 ppm, total Cl amount: 110 ppm |
| Fluoropolymer | D | Polytetrafluoroethylene<br>"FA-500H" by Daikin Industries. |
| Other components | E1 | Phosphorus Stabilizer<br>Tris(2,4-di-tert-butylphenyl)phosphite<br>"ADK STAB 2112" by ADEKA Corp. |
| | E2 | Phenolic thermal stabilizer<br>pentaerythritol tetrakis[3-(3,5-di-tert-butyl-4-hydroxyphenyl)propionate]<br>"IRGANOX 1010" by BASF |

<Production of Resin Composition Pellet>

The components listed in Table 9 above were blended at the proportions (parts by mass) listed in Tables 10 and 11 below, mixed in a tumbler for 20 minutes, then fed into a twin-screw extruder equipped with a single vent, "TEX 30$\alpha$" manufactured by The Japan Steel Works, Ltd., melt-mixed at a screw revolution number of 200 rpm, a discharge amount of 30 kg/hr, and a barrel temperature of 260°C, and molten resin extruded in a strand shape was quenched in a water tank and pelletized using a pelletizer to obtain pellets of a polycarbonate resin composition.

<Preparation of Test Pieces>

The pellets obtained in the production method described above were dried at 100°C for 4 hours and injection-molded using the NEX 80 III injection molding machine manufactured by Nissei Plastic Industrial Co., Ltd. at a cylinder temperature of 280°C and a mold temperature of 80°C to prepare an ISO multi-purpose test piece (3 mm).

The pellet obtained in the method described above was dried at 100°C for 4 hours and injection-molded at a

cylinder temperature of 280°C, a mold temperature of 80°C, and a molding cycle of 30 seconds using the SE 100 DU injection molding machine manufactured by Sumitomo Heavy Industries, Ltd., to prepare a test piece for UL combustion tests with a length of 125 mm, a width of 13 mm, and a thickness of 1.5 mm or 1.0 mm.

<Evaluation of Impact Resistance>

Using the ISO multi-purpose test piece (3 mm), which had been prepared in the manner described above, a V-notch with R = 0.25 was made in accordance with ISO 179, and notched Charpy impact strength (unit: $kJ/m^2$) was measured at 23°C and -40°C.

<Evaluation of Flame Retardancy>

The flame retardancy of each polycarbonate resin composition was evaluated by controlling the humidity of a test piece (1.5 mm or 1.0 mm) for the UL flammability test, which had been prepared in the manner described above, for 48 hours in a constant temperature and humidity room at a temperature of 23°C and a humidity of 50% and performing the test similarly to the manner described above in accordance with the UL 94 test (Tests for Flammability of Plastic Materials for Parts in Devices and Appliances) provided by the UL LLC.

[Table 10]

| | | Example | | Comparative Example | | | | | | |
|---|---|---|---|---|---|---|---|---|---|---|
| Component | Abbrev. | 13 | 14 | 17 | 18 | 19 | 20 | 21 | 22 | 23 |
| PC resin | A1 | 81 | 81 | 81.4 | 81.4 | 81.4 | 81.4 | 81.4 | 81.4 | 81.4 |
| | A2 | 19 | 19 | 18.6 | 18.6 | 18.6 | 18.6 | 18.6 | 18.6 | 18.6 |
| Flame retardant | B3-1 | 2 | 2 | 2 | 2 | 2 | 2 | 2 | 2 | 2 |
| Dienic rubber graft copolymer | C1 | 3 | 5 | | | | | | | |
| | CX1 | | | | 3 | 5 | | | | |
| | CX2 | | | | | | 3 | 5 | | |
| | CX3 | | | | | | | | 3 | 5 |
| Fluoropolymer | D | 0.3 | 0.3 | 0.3 | 0.3 | 0.3 | 0.3 | 0.3 | 0.3 | 0.3 |
| Other components | E1 | 0 | 0 | 0.03 | 0.03 | 0.03 | 0.03 | 0.03 | 0.03 | 0.03 |
| | E2 | 0.1 | 0.1 | 0.05 | 0.05 | 0.05 | 0.05 | 0.05 | 0.05 | 0.05 |
| 23°C Charpy ($kJ/m^2$) | | 77 | 74 | 78 | 77 | 75 | 76 | 72 | 76 | 72 |
| -40°C Charpy ($kJ/m^2$) | | 35 | 54 | 14 | 39 | 56 | 44 | 57 | 41 | 54 |
| UL 94-V flame retardancy (1.5mm) | | V-0 | V-0 | V-0 | V-1 | NR | V-1 | NR | V-1 | NR |

[Table 11]

| | | Example | Comparative Example | | | |
|---|---|---|---|---|---|---|
| Component | Abbrev. | 15 | 24 | 25 | 26 | 27 |
| PC resin | A1 | 81.4 | 81.4 | 81.4 | 81.4 | 81.4 |
| | A2 | 18.6 | 18.6 | 18.6 | 18.6 | 18.6 |
| Flame retardant | B3-1 | 5 | 5 | 5 | 5 | 5 |
| Dienic rubber graft copolymer | C1 | 5 | | | | |
| | CX1 | | | 5 | | |
| | CX2 | | | | 5 | |
| | CX3 | | | | | 5 |
| Fluoropolymer | D | 0.3 | 0.3 | 0.3 | 0.3 | 0.3 |

(continued)

| | | Example | Comparative Example | | | |
|---|---|---|---|---|---|---|
| Othe components | E1 | 0.03 | 0.03 | 0.03 | 0.03 | 0.03 |
| | E2 | 0.05 | 0.05 | 0.05 | 0.05 | 0.05 |
| 23°C Charpy (kJ/$m^2$) | | 75 | 72 | 75 | 72 | 73 |
| -40°C Charpy (kJ/$m^2$) | | 55 | 11 | 57 | 57 | 55 |
| UL 94-V flame retardancy (1.0 mm) | | V-0 | V-0 | V-1 | V-1 | V-1 |

[Industrial Applicability]

The polycarbonate resin composition of the present invention is excellent in flame retardancy, impact resistance, and impact resistance at low temperatures, and can be used widely and suitably in parts for electric/electronic apparatuses, office automation apparatuses, information terminal apparatuses, mechanical parts, home appliances, vehicle parts, building materials, various containers, leisure goods and miscellaneous goods, parts for lighting devices, and the like.

## Claims

1. A polycarbonate resin composition comprising, relative to 100 parts by mass of a polycarbonate resin (A), 0.01 to 15 parts by mass of a flame retardant (B), 1 to 15 parts by mass of a dienic rubber graft copolymer (C), and 0.01 to 1 part by mass of a fluoropolymer (D), wherein
   the dienic rubber graft copolymer (C) has a total phosphorus content of 1000 ppm or more and a total calcium content of 300 ppm or more in fluorescent X-ray analysis.

2. The polycarbonate resin composition of claim 1, wherein the polycarbonate resin (A) contains 20% to 100% of an aromatic polycarbonate resin having an end sealed with p-t-octylphenol.

3. The polycarbonate resin composition of claim 1, wherein the flame retardant (B) is an organometallic salt flame retardant (B1), a content thereof being 0.01 to 0.5 parts by mass relative to 100 parts by mass of the polycarbonate resin (A).

4. The polycarbonate resin composition of claim 3, wherein the organometallic salt flame retardant (B1) is an organic sulfonic acid metal salt.

5. The polycarbonate resin composition of claim 1, wherein the flame retardant (B) is a condensed phosphoric acid ester flame retardant (B2), a content thereof being 5 to 15 parts by mass relative to 100 parts by mass of the polycarbonate resin (A).

6. The polycarbonate resin composition of claim 1, wherein the flame retardant (B) is a phosphazene flame retardant (B3), a content thereof being 0.1 to 15 parts by mass relative to 100 parts by mass of the polycarbonate resin (A).

7. The polycarbonate resin composition of claim 1, wherein the dienic rubber graft copolymer (C) has a total phosphorus content of over 1200 ppm in fluorescence X-ray analysis.

8. The polycarbonate resin composition of claim 1, wherein the dienic rubber graft copolymer (C) has a total phosphorus content of 1500 ppm or more and 2500 ppm or less in fluorescence X-ray analysis.

9. A pellet from the polycarbonate resin composition of any one of claims 1 to 8.

10. A molded article obtained by molding the polycarbonate resin composition of any one of claims 1 to 8.

11. A molded article obtained by molding the polycarbonate resin composition pellet of claim 9.

**INTERNATIONAL SEARCH REPORT**

International application No.
**PCT/JP2023/023275**

**A. CLASSIFICATION OF SUBJECT MATTER**

***C08L 69/00***(2006.01)i; ***C08K 5/42***(2006.01)i; ***C08K 5/521***(2006.01)i; ***C08L 51/04***(2006.01)i
FI: C08L69/00; C08K5/42; C08K5/521; C08L51/04

According to International Patent Classification (IPC) or to both national classification and IPC

**B. FIELDS SEARCHED**

Minimum documentation searched (classification system followed by classification symbols)

C08L; C08K; C08F

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-019191 A (MITSUBISHI ENGINEERING PLASTICS CORP.) 07 February 2019 (2019-02-07) claims, examples 1, 4, 7 | 1, 3-4, 7-11 |
| Y | | 2 |
| Y | JP 2016-035021 A (MITSUBISHI ENGINEERING PLASTICS CORP.) 17 March 2016 (2016-03-17) claims, examples | 1-4, 7-11 |
| Y | JP 2020-111668 A (MITSUBISHI ENGINEERING PLASTICS CORP.) 27 July 2020 (2020-07-27) claims, examples | 1-2, 5, 7-11 |
| Y | WO 2019/225558 A1 (TEIJIN LTD.) 28 November 2019 (2019-11-28) claims, examples | 1-2, 6-11 |
| Y | JP 2010-150301 A (TECHNO POLYMER CO., LTD.) 08 July 2010 (2010-07-08) claims, example 3 | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 July 2023** | **01 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/023275**

**C. DOCUMENTS CONSIDERED TO BE RELEVANT**

| Category* | Citation of document, with indication, where appropriate, of the relevant passages | Relevant to claim No. |
|---|---|---|
| Y | JP 2022-067329 A (MITSUBISHI ENGINEERING PLASTICS CORP.) 06 May 2022 (2022-05-06)<br>paragraphs [0056]-[0061] | 2 |
| A | JP 10-298400 A (DENKI KAGAKU KOGYO K.K.) 10 November 1998 (1998-11-10)<br>entire text | 1-11 |
| A | WO 2013/157569 A1 (KANEKA CORP.) 24 October 2013 (2013-10-24)<br>entire text | 1-11 |
| A | CN 102875988 A (TEIJIN CHEM. LTD.) 16 January 2013 (2013-01-16)<br>entire text | 1-11 |

Form PCT/ISA/210 (second sheet) (January 2015)

**INTERNATIONAL SEARCH REPORT**
**Information on patent family members**

International application No.
**PCT/JP2023/023275**

| Patent document cited in search report | Publication date (day/month/year) | Patent family member(s) | Publication date (day/month/year) |
|---|---|---|---|
| JP 2019-019191 A | 07 February 2019 | (Family: none) | |
| JP 2016-035021 A | 17 March 2016 | (Family: none) | |
| JP 2020-111668 A | 27 July 2020 | (Family: none) | |
| WO 2019/225558 A1 | 28 November 2019 | CN 112189033 A<br>TW 202006063 A | |
| JP 2010-150301 A | 08 July 2010 | (Family: none) | |
| JP 2022-067329 A | 06 May 2022 | (Family: none) | |
| JP 10-298400 A | 10 November 1998 | (Family: none) | |
| WO 2013/157569 A1 | 24 October 2013 | US 2015/0065651 A1<br>entire text<br>EP 2840116 A1<br>KR 10-2015-0002604 A<br>CN 104704051 A<br>CN 105646791 A | |
| CN 102875988 A | 16 January 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012219177 A
- WO 2014171168 A
- JP 2019019191 A